# EUROPÄISCHE PATENTSCHRIFT

(11) **EP 2 319 628 B1**
(45) Veröffentlichungstag und Bekanntmachung des Hinweises auf die Patenterteilung: **07.01.2015**
(21) Anmeldenummer: 09405193.5
(22) Anmeldetag: 09.11.2009
(51) Int. Cl.: B05B 13/02, B05B 15/04

(54) **Beschichtungsvorrichtung für Werkstücke sowie Verfahren zum Betreiben der Beschichtungsvorrichtung**
Coating device for workpieces and method for operating the coating device
Dispositif de revêtement pour pièces usinées ainsi que procédé de fonctionnement du dispositif de revêtement

(43) Veröffentlichungstag der Anmeldung: 11.05.2011
(73) Patentinhaber: J. Wagner AG, 9450 Altstätten (CH)
(72) Erfinder: Greisner, Uwe, 51580 Reichshof (DE)
(74) Vertreter: Nückel, Thomas

(56) Entgegenhaltungen:
- EP-A2- 1 862 592
- FR-A1- 2 722 059
- US-A- 3 311 085
- US-A- 4 616 594

## Beschreibung

### Technisches Gebiet

Die Erfindung betrifft eine Beschichtungsvorrichtung für Werkstücke und ein Verfahren zum Betreiben der Beschichtungsvorrichtung.

Zum Beschichten des Werkstücks wird als Beschichtungsmaterial Pulver oder Nasslack verwendet.

Um ein Werkstück, wie beispielsweise ein metallisches Rohr, mit Pulver zu beschichten, wird das Pulver mit einer oder mehreren Pulversprühpistolen auf das Werkstück gesprüht. Damit das Pulver besser auf dem Werkstück haftet, kann das Pulver elektrostatisch aufgeladen werden. Anschliessend wird das Werkstück in einem Ofen erwärmt, so dass sich das Pulver verflüssigt. Anschliessend härtet das Pulver aus und bildet eine geschlossene Deckschicht auf dem Werkstück. Schliesslich wird das Werkstück wieder abgekühlt.

Um ein Werkstück mit Nasslack zu beschichten, wird der Nasslack mit einer oder mehreren Sprühpistolen auf das Werkstück gesprüht. Um die Haftung des Lacks auf dem Werkstück zu verbessern, kann der Lack ebenso wie das Pulver elektrostatisch aufgeladen werden. Anschliessend wird das Werkstück in einem Ofen erwärmt, so dass das Verdünnungsmittel aus dem Nasslack entweicht und der Lack trocknet. Dabei härtet der Lack aus und bildet eine geschlossene Deckschicht auf dem Werkstück.

### Stand der Technik

Soll allerdings nur ein bestimmter Bereich des Werkstücks beschichtet werden, sind besondere Massnahmen erforderlich.

Aus der Druckschrift DE 102 49 999 B3 ist eine Vorrichtung zur Absaugung bestimmter Flächenbereiche an bepulverten Fahrzeugrädern bekannt. Mit der Vorrichtung sollen vollautomatisch nach der Bepulverung der Fahrzeugräder diejenigen Flächenbereiche wieder von Pulver befreit werden können, an denen ein Lack nicht erwünscht ist. Die Vorrichtung umfasst ein Fördersystem, welches die Fahrzeugräder durch die Vorrichtung führt und eine elektronische Kamera, mit deren Hilfe in einer Erfassungsstation die Achs- und Winkellage der Fahrzeugräder erfasst werden. Darüber hinaus ist eine Absaugstation mit einem beweglichen Absaugkopf mit mehreren Saugdüsen vorgesehen. Mit Hilfe einer Bewegungseinrichtung kann der Absaugkopf in unterschiedliche Achsorientierungen und in unterschiedliche Winkelstellungen um seine Achse an die bepulverte Fläche eines in der Absaugstation befindlichen Fahrzeugrades herangeführt und in dieser Lage mit der Geschwindigkeit des Fahrzeugrades eine gewisse Strecke bewegt werden. Zudem ist eine Unterdruckquelle vorgesehen, welche mit den Saugdüsen verbunden ist. Mit einer Steuerung werden die in der Erfassungsstation für die Achsund Winkelstellung eines bestimmten Fahrzeugrades ermittelten Daten mit einer Zeitverzögerung, die der Durchlaufzeit des Fahrzeugrades zwischen der Erfassungsstation und der Absaugstation entspricht, an die Bewegungseinrichtung des Absaugkopfes weiterleitet und die Bewegungseinrichtung veranlasst, den Absaugkopf unter entsprechender Ausrichtung seiner Achse und seiner Winkellage an das Fahrzeugrad heranzuführen und sich mit diesem über eine gewisse Strecke zu bewegen. Diese Vorrichtung hat allerdings den Nachteil, dass sie aufwändig herzustellen und technisch komplex ist.

Aus der Druckschrift DE 25 40 993 A1 ist ein Verfahren und eine Vorrichtung zum Pulverbeschichten von ausgewählten Bereichen eines Artikels, wie beispielsweise eines Behälterbodens, bekannt. Die Vorrichtung umfasst eine Sprüheinrichtung zum Einspritzen von Luft und elektrisch aufgeladenen Pulverpartikeln durch eine Sprühkammer hindurch auf den ausserhalb der Sprühkammer befindlichen, zu beschichtenden Behälterboden. Weiterhin ist eine Abdeckkammer vorgesehen, die zwischen der ausgangsseitigen Öffnung der Sprühkammer und dem zu beschichtenden Behälterboden angeordnet ist und die ausgangsseitige Öffnung der Sprühkammer ringförmig umgibt. Mit Hilfe der Abdeckkammer, in der ein Unterdruck herrscht, sollen die Seitenwände des Behälters vor dem Kontakt mit den Pulverpartikeln geschützt werden.

Aus der Druckschrift US 3,311,085 ist eine Beschichtungsvorrichtung zum Beschichten kleiner elektronischer Bauteile mit pulverförmigem Beschichtungsmaterial bekannt. Die Beschichtungsvorrichtung ist dazu gedacht, das Bauteil nur partiell zu beschichten ohne dabei eine Beschichtungsmaske verwenden zu müssen. Die Vorrichtung umfasst eine Sprüheinrichtung, mit der das vorher über den Schmelzpunkt des Beschichtungsmaterials hinaus erwärmte Bauteil mit dem Beschichtungsmaterial beschichtet wird. Für kleine Bauteile mag diese Lösung sinnvoll sein. Sollen aber grössere Werkstücke nur partiell beschichtet werden, ist diese Lösung nicht besonders energieeffizient. Bei dieser Lösung wird nämlich vorgeschlagen, das gesamte Bauteil zu erwärmen, auch wenn nur ein Teil des Bauteils zu beschichten ist.

### Darstellung der Erfindung

Eine Aufgabe der Erfindung ist es, eine Beschichtungsvorrichtung für Werkstücke anzugeben, mit der ein bestimmter Bereich des Werkstücks mit einer möglichst scharfkantigen Beschichtungsgrenze beschichtet werden kann. Das heisst der Übergangsbereich zwischen dem beschichteten und dem unbeschichteten Bereich soll möglichst schmal sein. Die Beschichtungsvorrichtung soll insbesondere ohne Abdeckmaske auskommen und auch das nachträgliche Abblasen desjenigen Bereichs, der vom Beschichtungspulver frei zu haltenden ist, soll vermieden werden.

Die Aufgabe wird durch eine Beschichtungsvorrichtung für Werkstücke mit den Merkmalen gemäss Patentanspruch 1 gelöst.

Die erfindungsgemässe Beschichtungsvorrichtung für ein Werkstück umfasst einen Strömungskanal, der eine Öffnung für das Werkstück aufweist, durch die das Werkstück während des Beschichtens wenigstens teilweise ins Innere des Strömungskanals ragt. Zudem ist eine Sprühvorrichtung vorgesehen, die so angeordnet ist, dass mit ihr Beschichtungsmaterial im Inneren des Strömungskanals versprühbar ist. Darüber hinaus weist die Beschichtungsvorrichtung einen Strömungserzeuger auf, der so angeordnet und betreibbar ist, dass er im Strömungskanal eine in Längsrichtung des Strömungskanals gerichtete Strömung erzeugt.

Vorteilhafte Weiterbildungen der Erfindung ergeben sich aus den in den abhängigen Patentansprüchen angegebenen Merkmalen.

Bei einer Ausführungsform der erfindungsgemässen Beschichtungsvorrichtung weist der Strömungskanal eine seitliche Öffnung auf, durch die die Sprühvorrichtung hindurch ins Innere des Strömungskanals ragt. Dadurch dass nur ein Teil der Sprühvorrichtung ins Innere des Strömungskanals ragt, bleibt der ausserhalb des Strömungskanals befindliche Teil der Sprühvorrichtung im Wesentlichen frei von Beschichtungsmaterial, so dass sich der Reinigungsaufwand reduziert. Zudem wird dadurch der Einfluss der Sprühvorrichtung auf den Verlauf Strömung im Strömungskanal reduziert.

Bei einer weiteren Ausführungsform der erfindungsgemässen Beschichtungsvorrichtung befindet sich die Öffnung für das Werkstück auf der Stirnseite des Strömungskanals.

Bei der erfindungsgemässen Beschichtungsvorrichtung ist der Strömungserzeuger, in Strömungsrichtung gesehen, hinter der Sprühvorrichtung angeordnet. Dadurch wird erreicht, dass in dem Bereich, in dem sich die Beschichtungsmaterialwolke befindet, eine noch gleichmässigere, das heisst laminarere Strömung herrscht. Es wird also keine Luft in Richtung der Beschichtungsmaterialwolke geblasen, sondern die Luft wird abgesaugt.

Bei einer anderen Weiterbildung der erfindungsgemässen Beschichtungsvorrichtung ist eine weitere Sprühvorrichtung vorgesehen, die so angeordnet ist, dass mit ihr Beschichtungsmaterial im Inneren des Strömungskanals versprühbar ist. Dadurch kann das Werkstück gleichzeitig auf mehreren Seiten beschichtet werden.

Zudem ist es von Vorteil, wenn bei der erfindungsgemässen Beschichtungsvorrichtung der Strömungskanal so ausgerichtet ist, dass dessen Längsachse vertikal verläuft. Auf diese Weise wird zusätzlich zur Strömung die Schwerkraft benutzt, um eine gerichtete, räumlich genau abgegrenzte Beschichtungsmaterialwolke zu erzeugen.

Zur Lösung der Aufgabe wird ferner vorgeschlagen, dass der Strömungserzeuger der erfindungsgemässen Beschichtungsvorrichtung eine Luftstrahlpumpe aufweist. Die Luftstrahlpumpe ist besonders einfach aufgebaut, weist keine beweglichen Bauteile auf und ist besonders verschleissarm.

Nach einem weiteren Merkmal der erfindungsgemässen Beschichtungsvorrichtung weist der Strömungserzeuger ein Gebläse auf. Das Gebläse hat den Vorteil, dass es einen hohen Wirkungsgrad hat.

Darüber hinaus kann bei der erfindungsgemässen Beschichtungsvorrichtung ein Rost vorgesehen sein, wobei die Sprühvorrichtung oberhalb des Rosts und das Gebläse unterhalb des Rosts angeordnet ist.

Bei der erfindungsgemässen Beschichtungsvorrichtung kann, in Strömungsrichtung gesehen, vor dem Gebläse ein Filter vorgesehen sein. Damit kann das versprühte Pulver, das nicht auf dem Werkstück haftet, gesammelt und gegebenenfalls wiederverwendet werden.

Zudem ist es von Vorteil bei der erfindungsgemässen Beschichtungsvorrichtung einen Roboter vorzusehen, der die Sprühvorrichtung hält und führt.

Bei der erfindungsgemässen Beschichtungsvorrichtung kann auch ein Roboter vorgesehen sein, der das Werkstück hält und führt.

Gemäss einer weiteren Ausführungsform der erfindungsgemässen Beschichtungsvorrichtung weist der Strömungskanal einen runden Querschnitt auf. Dadurch wird erreicht, dass sich an der Wand des Strömungskanals wenig Beschichtungsmaterial ablagert und der Strömungskanal einfach und schnell gereinigt werden kann.

Bei einer Weiterbildung der erfindungsgemässen Beschichtungsvorrichtung besteht der Strömungskanal aus Metall oder Kunststoff. Den Strömungskanal aus Kunststoff herzustellen hat den Vorteil, dass elektrisch geladene Beschichtungspartikel nicht vom Strömungskanal angezogen werden und an dessen Innenseite haften bleiben. Mit einem aus Metall hergestellten Strömungskanal kann eine gezielte Abschirmung geschaffen werden.

Darüber hinaus ist es von Vorteil, wenn bei der erfindungsgemässen Beschichtungsvorrichtung die Sprühvorrichtung im Wesentlichen quer zur Längsachse des Strömungskanals angeordnet ist.

Das erfindungsgemässe Verfahren zum Betreiben der oben beschriebenen Beschichtungsvorrichtung umfasst folgende Schritte. Wenigstens der zu beschichtende Bereich des Werkstücks wird in den Strömungskanal eingeführt. Mittels des Strömungserzeugers wird ein Luftstrom im Strömungskanal erzeugt und mittels der Sprühvorrichtung wird eine Be-schichtungsmaterialwolke erzeugt, um das Werkstück zu beschichten.

Schliesslich kann die erfindungsgemässe Beschichtungsvorrichtung zum Beschichten von Werkstücken mit Beschichtungspulver oder Nasslack verwendet werden.

### Kurze Beschreibung der Zeichnungen

Im Folgenden wird die Erfindung mit mehreren Ausführungsbeispielen anhand von neun Figuren weiter erläutert.
- Figur 1: zeigt eine erste Ausführungsform der erfindungsgemässen Beschichtungsvorrichtung in einer drei-dimensionalen Ansicht im Schnitt.
- Figur 2: zeigt die erste Ausführungsform der erfindungsgemässen Beschichtungsvorrichtung in einer dreidimensionalen Ansicht schräg von oben.
- Figur 3: zeigt die erste Ausführungsform der erfindungsgemässen Beschichtungsvorrichtung in einer dreidimensionalen Ansicht von oben.
- Figur 4: zeigt eine Ausführungsform einer Luftstrahlpumpe zur Erzeugung der Luftströmung im Strömungskanal der Beschichtungsvorrichtung im Schnitt.
- Figur 5: zeigt eine Ausführungsform einer kammartigen Druckluftdüse zur Erzeugung der Luftströmung im Strömungskanal der Beschichtungsvorrichtung im Schnitt.
- Figur 6: zeigt eine zweite Ausführungsform der erfindungsgemässen Beschichtungsvorrichtung in einer dreidimensionalen Ansicht schräg von oben.
- Figur 7: zeigt eine dritte Ausführungsform der erfindungsgemässen Beschichtungsvorrichtung in einer dreidimensionalen Ansicht schräg von vorn oben.
- Figur 8: zeigt eine vierte Ausführungsform der erfindungsgemässen Beschichtungsvorrichtung in einer dreidimensionalen Ansicht schräg von vorn oben.
- Figur 9: zeigt eine fünfte Ausführungsform der erfindungsgemässen Beschichtungsvorrichtung in einer dreidimensionalen Ansicht schräg von vorn oben.

### Wege zur Ausführung der Erfindung

Die erfindungsgemässe Beschichtungsvorrichtung ist zum Beschichten eines Werkstücks mit verschiedenen Beschichtungsmaterialen, wie beispielsweise Pulver oder Nasslack geeignet.

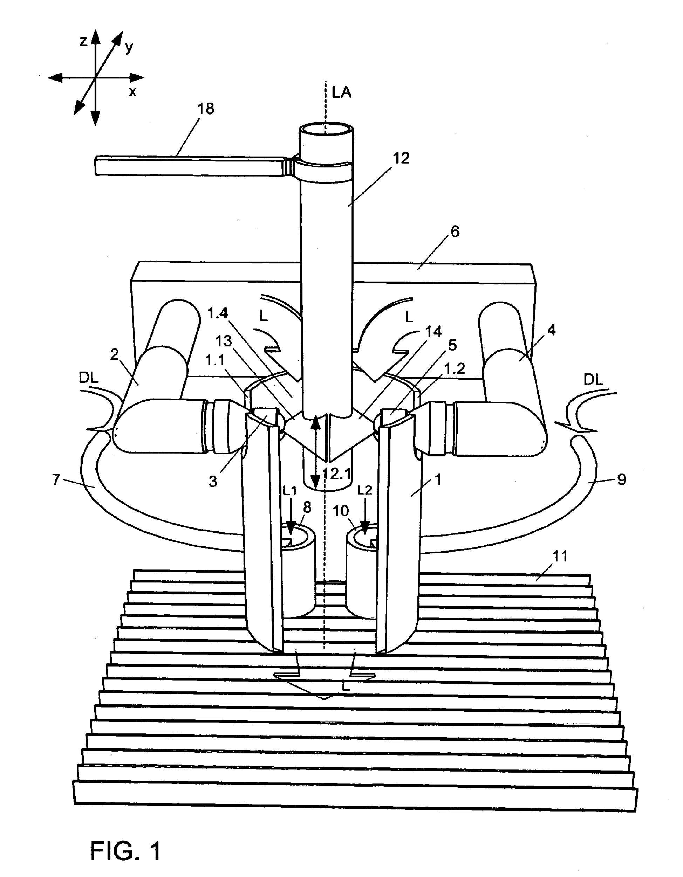

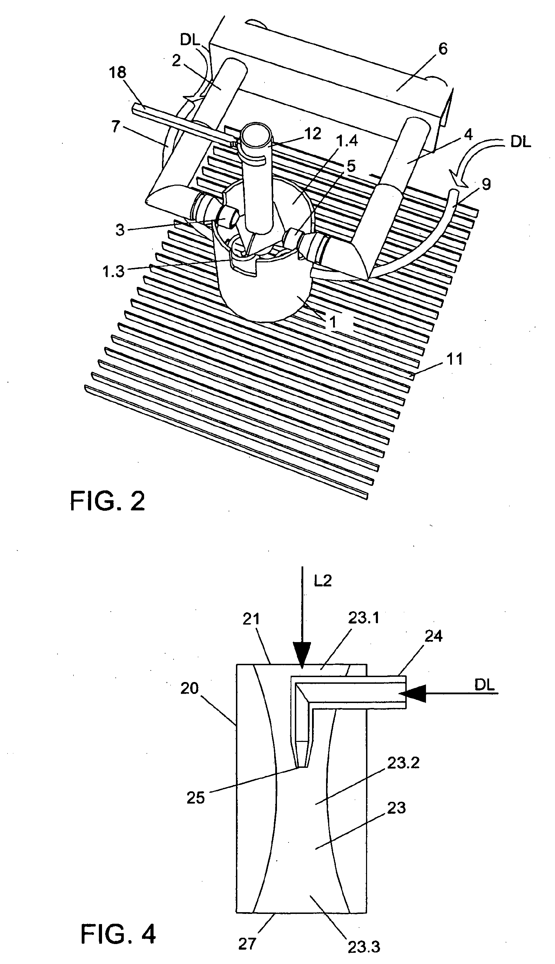

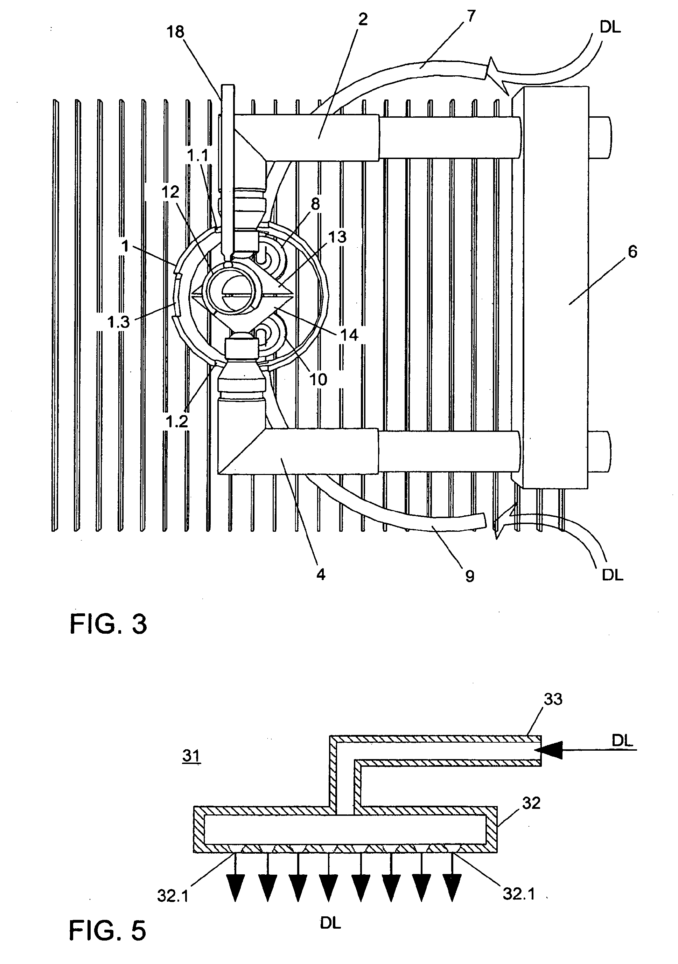

Figur 1 zeigt eine erste Ausführungsform der erfindungsgemässen Beschichtungsvorrichtung in einer dreidimensionalen Ansicht im Schnitt von vorn. In Figur 2 ist die erste Ausführungsform der erfindungsgemässen Beschichtungsvorrichtung in einer dreidimensionalen Ansicht schräg von vorn oben dargestellt. Figur 3 schliesslich zeigt die erste Ausführungsform der erfindungsgemässen Beschichtungsvorrichtung in einer dreidimensionalen Ansicht senkrecht von oben. Die Beschichtungsvorrichtung umfasst einen Strömungskanal 1, der in Figur 1 im Schnitt gezeigt ist. Der Strömungskanal 1 hat die Form eines Rohrs und ist senkrecht, das heisst vertikal ausgerichtet. Dessen Längsachse ist mit LA gekennzeichnet. Im oberen Bereich weist der Strömungskanal 1 eine erste seitliche Öffnung 1.1, eine zweite seitliche Öffnung 1.2 und eine dritte seitliche Öffnung 1.3 auf. Letztere ist aufgrund der Schnittdarstellung in Figur 1 nicht zu sehen, sondern lediglich in den Figuren 2 und 3 gezeigt.

Durch die erste seitliche Öffnung 1.1 ragt ein Teil einer ersten Sprühvorrichtung 2 ins Innere des Strömungskanals 1 und durch die zweite seitliche Öffnung 1.2 ragt ein Teil einer zweiten Sprühvorrichtung 4 ins Innere des Strömungskanals 1.

Die beiden Sprühvorrichtungen 2 und 4 werden über eine gemeinsame Halterung 6 so gehalten, dass sich ihre Sprühdüsen 3 beziehungsweise 5 im Inneren des Strömungskanals 1 befinden. Die Halterung 6 kann an einem Arm eines in den Figuren nicht gezeigten Roboters befestigt sein. Dadurch können die Sprühvorrichtungen 2 und 4 relativ zum Werkstück 12 bewegt werden, um eine noch bessere Beschichtung zu erzielen.

Die Form der Mündung der Sprühdüsen 3 und 5 hängt von der Form des zu beschichtenden Werkstücks ab. Im in den Figuren 1 bis 3 gezeigten Ausführungsbeispiel sind die Mündungen der Sprühdüsen 3 und 5 schlitzförmig ausgebildet.

Die Beschichtungsmaterialwolke 13, die durch die erste Sprühvorrichtung 2 erzeugt wird, und die Beschichtungsmaterialwolke 14, die durch die zweite Sprühvorrichtung 4 erzeugt wird, sind in den Figuren lediglich schematisch dargestellt. Ihre Form hängt unter anderem von der Form der Sprühdüsen 3 und 5, dem Sprühdruck, dem verwendeten Beschichtungsmaterial und der Geschwindigkeit ab, mit der die Luft L durch den Strömungskanal 1 strömt.

Auf der oberen Stirnseite des Strömungskanals 1 befindet sich eine weitere Öffnung 1.4, die im Folgenden auch als Strömungskanaleinlass bezeichnet wird. Das zu beschichtende Werkstück 12, das mittels einer Halterung 18 gehalten wird, ragt durch die Öffnung 1.4 ebenfalls ins Innere des Strömungskanals 1. Die Halterung 18 kann Teil einer Förderanlage oder auch der Arm eines Roboters sein.

Unterhalb des Strömungskanals 1 befindet sich ein Rost 11. Der Strömungskanal 1 kann auf dem Rost 11 stehen oder auch in einem bestimmten Abstand zum Rost 11 oberhalb des Rosts 11 gehalten werden. Auf der unteren Stirnseite des Strömungskanals 1 befindet sich eine weitere Öffnung, die auch als Strömungskanalauslass bezeichnet wird.

Im unteren Bereich des Strömungskanals 1 befinden sich zwei Luftstrahlpumpen 8 und 10. Die erste Luftstrahlpumpe 8 wird über einen Druckluftschlauch 7 mit Druckluft DL versorgt und saugt von oben Luft L1 an. Die zweite Luftstrahlpumpe 10 wird über einen zweiten Druckluftschlauch 9 ebenfalls mit Druckluft DL versorgt und saugt von oben Luft L2 an. Dadurch sorgen die beiden Luftstrahlpumpen 8 und 10 dafür, dass Luft L von oben in den Strömungskanal 1 gesaugt wird und erzeugen so eine laminare Luftströmung, die im Wesentlichen parallel zur Längsachse LA von oben nach unten verläuft. Auf der Unterseite tritt die Luft L durch den Strömungskanalauslass wieder aus dem Strömungskanal 1 aus.

Figur 4 zeigt eine Ausführungsform der Luftstrahlpumpen 8 und 10 zur Erzeugung der Luftströmung L im Strömungskanal 1 der Beschichtungsvorrichtung. Die Luftstrahlpumpen 8 und 10 arbeiten nach dem Venturi-Prinzip. Im Folgenden wird der Aufbau der Luftstrahlpumpen anhand Luftstrahlpumpe 8 beschrieben. Für die Luftstrahlpumpe 10 gilt jedoch sinngemäss das Gleiche. Die Luftstrahlpumpe 8 umfasst ein Gehäuse 20, in dem sich ein Kanal 23 befindet, der sowohl im Ansaugbereich 23.1 als auch im Auslassbereich 23.3 einen grösseren Durchmesser aufweist als im mittleren Bereich 23.2. In den mittleren Bereich 23.2 des Kanals 23 ragt eine Druckluftdüse 25 hinein, durch die Druckluft DL in Richtung des Auslassbereichs 23.3 geblasen wird. Die Druckluftdüse 25 ist über eine Leitung mit einem ausserhalb des Gehäuses 20 angeordneten Druckluftanschluss 24 verbunden und wird von dort mit Druckluft DL versorgt. An den Druckluftanschluss 24 ist der Druckluftschlauch 7 angeschlossen. Durch die schnell aus der Druckluftdüse 25 ausströmende Druckluft DL entsteht ein Sog, der bewirkt, dass die Luft L2 durch die Ansaugöffnung 21 in den Kanal 23 gesaugt wird. Auf diese Weise wird mit wenig, aber schnell strömender Druckluft DL ein grossvolumiger, aber langsam strömender Luftstrom L2 erzeugt. Am Ende des Kanals 23 befindet sich eine Auslassöffnung 27, durch die die angesaugte Luft L2 und die Druckluft DL aus der Luftstrahlpumpe strömen.

Figur 5 zeigt eine Ausführungsform einer kammartigen Druckluftdüse 31 zur Erzeugung der Luftströmung L im Strömungskanal 1 der Beschichtungsvorrichtung. Die Druckluftdüse 31 umfasst ein Gehäuse 32, das auf seiner Unterseite mehrere Druckluftauslässe 32.1 aufweist, durch die Druckluft DL ausströmt. Durch die Vielzahl der Druckluftauslässe 32.1 entstehen entsprechend viele nach unten gerichtete Druckluftströme, die dafür sorgen, dass sich im Inneren des Strömungskanals 1 ein gleichmässiger, gerichteter Luftstrom L bildet, der im Wesentlichen parallel zur Längsachse LA verläuft.

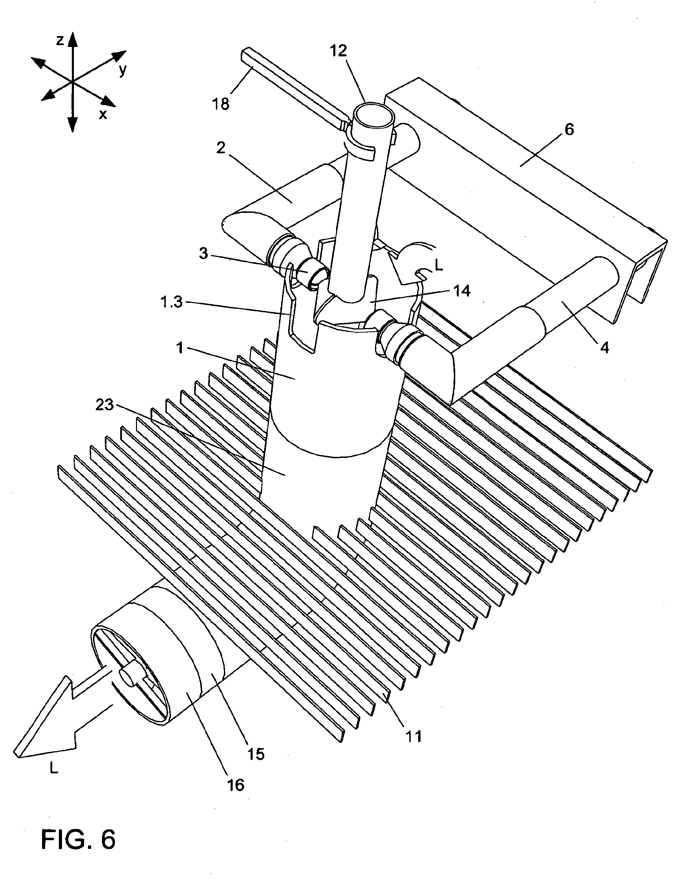

Figur 6 zeigt eine zweite Ausführungsform der erfindungsgemässen Beschichtungsvorrichtung in einer dreidimensionalen Ansicht schräg von oben. Diese Ausführungsform unterscheidet sich von der ersten Ausführungsform zum einen dadurch, dass der Strömungskanal 1 über einen Verbindungskanal 23 mit einem Filter 15 und einem Sauggebläse 16 verbunden ist. Sowohl der Filter 15 als auch das Sauggebläse 16 sind unterhalb des Rostes 11 angeordnet. Mit dem Sauggebläse 16 wird im Verbindungskanal 23 ein Unterdruck erzeugt, der dazu führt, dass die Luft L von oben in den Strömungskanal 1 gesaugt wird. Dadurch entsteht im Strömungskanal 1 ein im wesentlichen parallel zur Längsachse LA verlaufender, nach unten gerichteter Luftstrom L. Diejenigen Beschichtungsmaterialpartikel, die während des Besprühens des Werkstücks 12 nicht an diesem anhaften, werden zusammen mit dem Luftstrom L in den Filter 15 gesaugt und dort aus dem Luftstrom L herausgefiltert. Auf der Unterseite des Filters 15 kann das so zurück gewonnene Beschichtungsmaterial entnommen und bei Bedarf wieder den Sprühvorrichtungen 2 und 4 zugeführt werden. Zum anderen unterscheidet sich die zweite Ausführungsform von der ersten Ausführungsform dadurch, dass die seitlich in den Strömungskanal 1 hineinragenden Druckluftleitungen 7 und 9 nicht vorhanden sind.

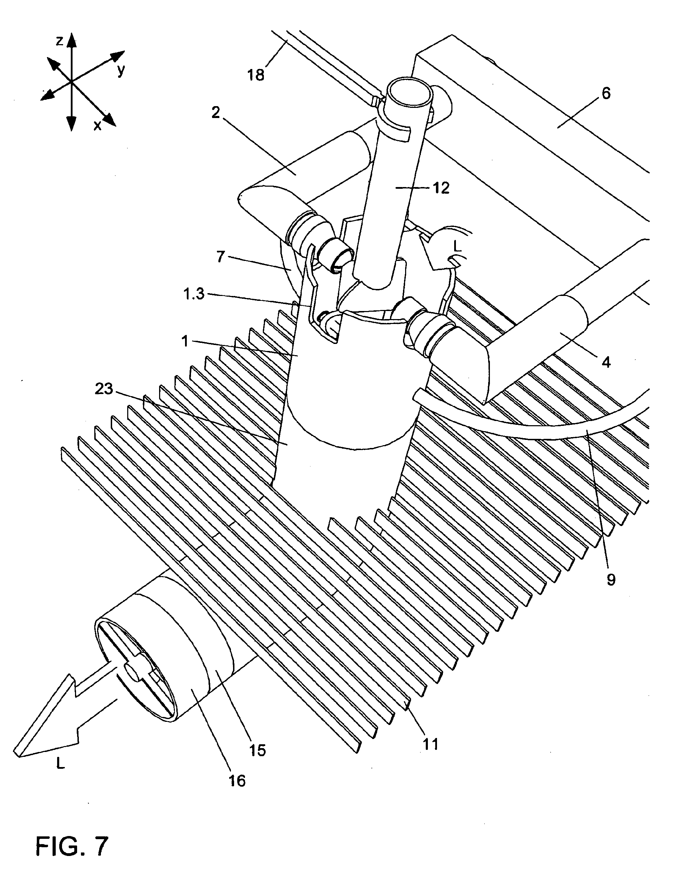

Figur 7 zeigt eine dritte Ausführungsform der erfindungsgemässen Beschichtungsvorrichtung in einer dreidimensionalen Ansicht schräg von vorn oben. Die dritte Ausführungsform stellt eine Kombination der ersten und der zweiten Ausführungsform dar. So weist die dritte Ausführungsform sowohl die seitlich in den Strömungskanal 1 hineinragenden Druckluftleitungen 7 und 9 und die dazugehörigen Luftstrahlpumpen 8 und 10 als auch das Sauggebläse 16, den Filter 15 und den Verbindungskanal 23 auf.

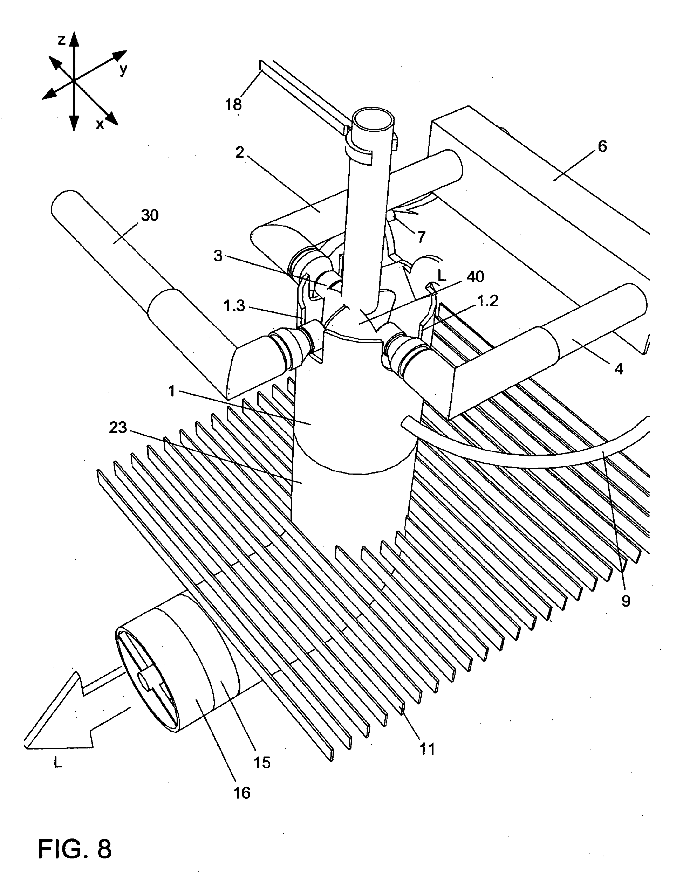

Figur 8 zeigt eine vierte Ausführungsform der erfindungsgemässen Beschichtungsvorrichtung in einer dreidimensionalen Ansicht schräg von vorn oben. Zusätzlich zur dritten Ausführungsform ist bei der vierten Ausführungsform eine dritte Sprühpistole 30 vorhanden, die durch die Öffnung 1.3 in den Strömungskanal 1 hineinragt.

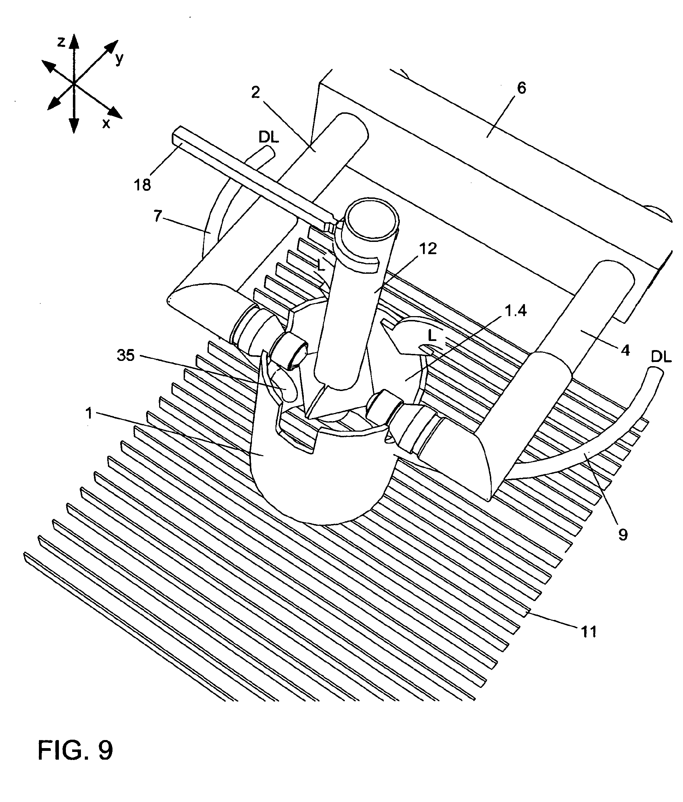

Figur 9 zeigt eine fünfte Ausführungsform der erfindungsgemässen Beschichtungsvorrichtung in einer dreidimensionalen Ansicht schräg von vorn oben. Hierbei befinden sich zwei Düsen 35 im Inneren des Strömungskanals 1, wobei deren Öffnung nach unten, das heisst von der Beschichtungsmaterialwolke weg zeigen, so dass die Druckluft DL, die von den beiden Düsen 35 ausströmt, im Strömungskanal 1 einen nach unten gerichteten Luftstrom L erzeugt. Die beiden Düsen 35 werden über die Druckluftleitungen 7 beziehungsweise 9, die beispielsweise als Schlauchleitungen ausgebildet sein können, mit Druckluft DL versorgt. Statt der beiden Düsen 35 können auch zwei der in Figur 5 gezeigten kammartigen Druckluftdüse 31 verwendet werden.

Es können auch Sprühvorrichtungen 2, 4 und 30 verwendet werden, die Sprühpistolen in Verbindung mit fingerförmigen Sprühdüsen aufweisen. Vorteilhafter Weise ragen möglichst wenige Komponenten der Sprühvorrichtungen 2, 4 und 30 ins Innere des Strömungskanals 1, weil dann der Einfluss der Sprühvorrichtungen 2, 4 und 30 auf den Luftstrom L kleiner wird und weil dann weniger Komponenten der Verschmutzung durch Beschichtungsmaterial ausgesetzt ist.

Bei den in den Figuren 1 bis 9 dargestellten Ausführungsformen der Beschichtungsvorrichtung ist der Strömungskanal 1 so ausgerichtet, dass dessen Längsachse LA vertikal verläuft. Auf diese Weise wird zusätzlich zur Luftströmung L die Schwerkraft benutzt, um eine gerichtete, räumlich genau abgegrenzte Beschichtungsmaterialwolke zu erzeugen. Es ist aber auch möglich den Strömungskanal 1 zum Beispiel horizontal auszurichten.

Der Strömungskanal 1 kann auch aus mehreren Teilen zusammengesetzt sein. Unter Umständen kann es hilfreich sein den Strömungskanal 1 aus zwei Rohrhälften zu bilden, welche während des Beschichtungsvorgangs zusammengefügt sind. Zum Reinigen können die beiden Rohrhälften dann voneinander beabstandet werden. Satt das Werkstück 12 in den Strömungskanal 1 hineinzuführen, können auch die beiden Rohrhälften, nachdem das zu beschichtende Werkstück positioniert ist, von zwei Seiten an das Werkstück herangeführt werden, so dass sie am Ende das Werkstück ausreichend weit umschiessen.

Im Folgenden wird ein mögliches Betriebsverfahren erläutert. Um das Werkstück 12 zu beschichten, wird der zu beschichtende Bereich 40 des Werkstücks 12 in den Strömungskanal 1 eingeführt. Mittels des Strömungserzeugers, welcher die Luftstrahlpumpen 8 und 10 und/oder die kammartigen Druckluftdüsen 31 und/oder die Druckluftdüsen 35 umfasst, wird ein Luftstrom L im Strömungskanal 1 erzeugt. Anschliessend wird mittels der Sprühvorrichtung 2 und/oder 4 und/oder 30 eine Beschichtungsmaterialwolke 13, 14, 40 erzeugt, um das Werkstück 1 zu beschichten. Die oben genannten Schritte können in beliebiger Reihenfolge ausgeführt werden. Unter Umständen ist es jedoch sinnvoll, weil materialsparend, wenn die Schritte in der oben genannten Reihenfolge durchgeführt werden.

Mit der Beschichtungsvorrichtung wird eine Beschichtungsmaterialwolke erzeugt, die auf einer Seite eine definierte, klar abgegrenzte Grenze aufweist. Die Beschichtungsmaterialwolke ist in der Regel auf ihrer, der Einlassseite 1.4 des Strömungskanals 1 zugewandten Seite am schärfsten abgrenzt. Trifft die Beschichtungsmaterialwolke auf das Werkstück, ergibt sich dort, wo die Beschichtungsmaterialwolke die schärfste Grenze aufweist, auch der schärfste Übergang zwischen beschichteter und unbeschichtetem Werkstückfläche. Als Beschichtungsgrenze wird eine Übergangszone am Werkstück 12 bezeichnet, in der ein beschichteter Bereich in einen unbeschichteten Bereich übergeht. Bei der in Figur 1 gezeigten Ausführungsform sind damit die von der Beschichtungsvorrichtung erzeugten Beschichtungsmaterialwolken 13 und 14 nach oben hin klar abgegrenzt. Würde die in Figur 1 gezeigte Ausführungsform der Beschichtungsvorrichtung nicht vertikal, sondern horizontal ausgerichtet sein, wären die von der Beschichtungsvorrichtung erzeugten Beschichtungsmaterialwolken 13 und 14 seitlich klar abgegrenzt.

Soll ein so grosser Bereich 12.1 des Werkstücks 12 beschichtet werden, dass die durch die Beschichtungsmaterialwolken abdeckbaren Bereiche zu klein sind, wird das Werkstück 12 zuerst in dem Bereich beschichtet, in dem sich die am Werkstück 12 gewünschte Beschichtungsgrenze befinden soll. Anschliessend wird das Werkstück 12 so bewegt, dass anschliessend der übrige zu beschichtende Bereich im Erfassungsbereich der Sprühvorrichtungen 2, 4 und/oder 30 liegt und beschichtet werden kann. Bei der in Figur 1 dargestellten Positionierung des Werkstücks 12 wird also zuerst mit den beiden Sprühvorrichtungen 2 und 4 der obere Bereich des Werkstücks 12 beschichtet. Die obere Grenze dieses oberen Bereichs ist die gewünschte Beschichtungsgrenze. Oberhalb dieser Grenze soll das Werkstück 12 nicht beschichtet werden.

Statt dessen ist es aber auch möglich das Werkstück 12 zuerst im unteren Bereich zu beschichten und dann das Werkstück 12 weiter in den Strömungskanal 1 hineinzuführen, um es schliesslich bis zur gewünschten Beschichtungsgrenze hin zu beschichten.

Am Ende des Beschichtungsvorgangs wird das Werkstück 12 zur nächsten Bearbeitungsstation, beispielsweise einem Ofen, transportiert.

Je schneller der Luftstrom L im Inneren des Strömungskanals 1 strömt, desto mehr Beschichtungsmaterial wird dadurch durch den Luftstrom abgelenkt. Für die in den Figuren 1 bis 9 gezeigten Ausführungsformen bedeutet dies, dass mehr Beschichtungsmaterial nach unten abgelenkt wird. Auch die Geschwindigkeit mit der das Beschichtungsmaterial aus der Mündung der Sprühdüse, z.B. der Sprühdüse 3, austritt hat einen Einfluss auf dessen Ablenkung. Je höher die Materialsprühgeschwindigkeit ist, desto geringer ist dessen Ablenkung nach unten. Die optimale Einstellung der Strömungsgeschwindigkeit des Luftstroms L und der Materialsprühgeschwindigkeit hängt unter anderem von der Bauform des Strömungskanals, der Grösse der Beschichtungspartikel, der verwendeten Sprühdüsenform und der Geometrie des zu beschichtenden Werkstücks ab.

Die vorhergehende Beschreibung der Ausführungsbeispiele gemäss der vorliegenden Erfindung dient nur zu illustrativen Zwecken und nicht zum Zwecke der Beschränkung der Erfindung. Im Rahmen der Erfindung sind verschiedene Änderungen und Modifikationen möglich, ohne den Umfang der Erfindung sowie ihre Äquivalente zu verlassen. So sind beispielsweise die verschiedenen in den Figuren 1 is 9 gezeigten Komponenten auch auf eine andere als in den Figuren gezeigte Weise miteinander kombinierbar. Zudem können beispielsweise auch mehr oder weniger als zwei Luftstrahlpumpen und mehr oder weniger als zwei der kammartigen Druckluftdüsen zum Einsatz kommen.

### Bezugszeichenliste

- 1: Strömungskanal
- 1.1: Ausnehmung
- 1.2: Ausnehmung
- 1.3: Ausnehmung
- 1.4: stirnseitige Öffnung im Strömungskanal
- 2: Sprühpistole
- 3: Sprühdüse
- 4: Sprühpistole
- 5: Sprühdüse
- 6: Pistolenhalterung
- 7: Druckluftleitung
- 8: Luftstrahlpumpe
- 9: Druckluftleitung
- 10: Luftstrahlpumpe
- 11: Rost
- 12: Werkstück
- 12.1: zu beschichtender Bereich des Werkstücks
- 13: Sprühstrahlwolke
- 14: Sprühstrahlwolke
- 15: Filter
- 16: Gebläse
- 18: Greifer
- 20: Gehäuse
- 21: Ansaugöffnung
- 23: Kanal
- 23.1: Ansaugbereich
- 23.2: mittlerer Bereich des Kanals
- 23.3: Auslassbereich
- 24: Druckluftanschluss
- 25: Druckluftdüse
- 27: Auslassöffnung
- 30: Sprühpistole
- 31: kammartige Druckluftdüse
- 32: Gehäuse
- 32.1: Druckluftauslässe
- 33: Druckluftanschluss
- 35: Druckluftdüse
- 40: Sprühstrahlwolke
- L: angesaugte Luft beziehungsweise Luftstrom
- L1: angesaugte Luft
- L2: angesaugte Luft
- DL: Druckluft
- LA: Längsachse

## Patentansprüche

1. Beschichtungsvorrichtung für ein Werkstück,
- mit einer Sprühvorrichtung (2),
- mit einem rohrförmig ausgebildeten Strömungskanal (1), der eine seitliche Öffnung (1.1) für die Sprühvorrichtung (2) und eine Öffnung (1.4) für das Werkstück (12) aufweist, durch die das Werkstück (12) während des Beschichtens wenigstens teilweise ins Innere des Strömungskanals (1) ragt,
- mit einem Mittel zum elektrostatischen Aufladen von Beschichtungsmaterial (13),
- bei der die Sprühvorrichtung (2) so angeordnet ist, dass mit ihr das Beschichtungsmaterial (13) im Inneren des Strömungskanals (1) versprühbar ist,
- mit einer Halterung (6), die die Sprühvorrichtung (2) hält und mit der die Sprühvorrichtung (2) relativ zum Werkstück (12) bewegbar ist,
- mit einem Strömungserzeuger (7, 8; 31; 35), der so angeordnet und betreibbar ist, dass er im Strömungskanal (1) eine in Längsrichtung (LA) des Strömungskanals (1) gerichtete Strömung (L1, L2) erzeugt, und
- bei der der Strömungserzeuger (7, 8; 31; 35), in Strömungsrichtung gesehen, hinter der Sprühvorrichtung (2) angeordnet ist.

2. Beschichtungsvorrichtung nach Patentanspruch 1, bei der der Strömungskanal (1) eine seitliche Öffnung (1.1) aufweist, durch die die Sprühvorrichtung (2) hindurch ins Innere des Strömungskanals (1) ragt.

3. Beschichtungsvorrichtung nach Patentanspruch 1 oder 2,
bei der die Öffnung (1.4) für das Werkstück sich auf der Stirnseite des Strömungskanals (1) befindet.

4. Beschichtungsvorrichtung nach einem der Patentansprüche 1 bis 3,
mit einer weiteren Sprühvorrichtung (4), die so angeordnet ist, dass mit ihr Beschichtungsmaterial (14) im Inneren des Strömungskanals (1) versprühbar ist.

5. Beschichtungsvorrichtung nach einem der Patentansprüche 1 bis 4,
bei der der Strömungskanal (1) so ausgerichtet ist, dass dessen Längsachse (LA) vertikal verläuft.

6. Beschichtungsvorrichtung nach einem der Patentansprüche 1 bis 5,
bei der der Strömungserzeuger eine Luftstrahlpumpe (8) aufweist.

7. Beschichtungsvorrichtung nach einem der Patentansprüche 1 bis 6,
bei der der Strömungserzeuger ein Gebläse (16) aufweist.

8. Beschichtungsvorrichtung nach Patentanspruch 7, mit einem Rost (11), wobei die Sprühvorrichtung (2) oberhalb und das Gebläse (16) unterhalb des Rosts (11) angeordnet ist.

9. Beschichtungsvorrichtung nach Patentanspruch 7 oder 8,
bei der in Strömungsrichtung gesehen vor dem Gebläse (16) ein Filter (15) vorgesehen ist.

10. Beschichtungsvorrichtung nach einem der Patentansprüche 1 bis 9,
mit einem Roboter, der die Sprühvorrichtung (2) und/oder das Werkstück (12) hält und führt.

11. Beschichtungsvorrichtung nach einem der Patentansprüche 1 bis 10,
bei der der Strömungskanal (1) einen runden Querschnitt aufweist.

12. Beschichtungsvorrichtung nach einem der Patentansprüche 1 bis 11,
bei der das Strömungskanal (1) aus Metall oder Kunststoff besteht.

13. Beschichtungsvorrichtung nach einem der Patentansprüche 1 bis 12,
bei der die Sprühvorrichtung (2) im Wesentlichen quer zur Längsachse (LA) des Strömungskanals (1) angeordnet ist.

14. Verfahren zum Betreiben einer Beschichtungsvorrichtung nach einem der Patentansprüche 1 bis 13,
- bei dem wenigstens der zu beschichtende Bereich des Werkstücks (12) in den Strömungskanal (1) eingeführt wird,
- bei dem mittels des Strömungserzeugers (7, 8; 31; 35) ein Luftstrom (L1, L2) im Strömungskanal (1) erzeugt wird, und
- bei dem mittels der Sprühvorrichtung (2) eine Beschichtungsmaterialwolke (13) erzeugt wird.

15. Verwendung der Beschichtungsvorrichtung nach einem der Patentansprüche 1 bis 13,
zum Beschichten von Werkstücken (12) mit Beschichtungspulver oder Nasslack.

## Claims

1. A coating device for a workpiece,
- comprising a spraying device (2),
- comprising a tubular flow channel (1), which has a lateral opening (1.1) for the spraying device (2) and an opening (1.4) for the workpiece (12), through which the workpiece (12) protrudes at least partially into the interior of the flow channel (1) during the coating,
- comprising a means for the electrostatic charging of coating material (13),
- wherein the spraying device (2) is disposed such that it can be used to spray the coating material (13) in the interior of the flow channel (1),
- comprising a holder (6), which holds the spraying device (2) and by means of which the spraying device (2) can be moved relative to the workpiece (12),
- comprising a flow producer (7, 8; 31; 35), which is disposed and operable such that it produces a flow (L1, L2) in the longitudinal direction (LA) of the flow channel (1), and
- wherein the flow producer (7, 8; 31; 35) is disposed behind the spraying device (2) as viewed in the direction of flow.

2. The coating device according to claim 1,
wherein the flow channel (1) has a lateral opening (1.1), through which the spraying device (2) protrudes into the interior of the flow channel (1).

3. The coating device according to claim 1 or 2,
wherein the opening (1.4) for the workpiece is located on the front side of the flow channel (1).

4. The coating device according to any one of claims 1 to 3,
comprising a further spraying device (4), which is disposed such that it can be used to spray coating material (14) in the interior of the flow channel (1).

5. The coating device according to any one of claims 1 to 4,
wherein the flow channel (1) is oriented such that the longitudinal axis (LA) thereof extends vertically.

6. The coating device according to any one of claims 1 to 5,
wherein the flow producer comprises an air jet pump (8).

7. The coating device according to any one of claims 1 to 6,
wherein the flow producer comprises a blower (16).

8. The coating device according to claim 7, comprising a grating (11), wherein the spraying device (2) is disposed above the grating (11) and the blower (16) is disposed below the grating (11).

9. The coating device according to claim 7 or 8,
wherein a filter (15) is provided in front of the blower (16) as viewed in the flow direction.

10. The coating device according to any one of claims 1 to 9,
comprising a robot, which holds and guides the spraying device (2) and/or the workpiece (12).

11. The coating device according to any one of claims 1 to 10,
wherein the flow channel (1) has a round cross-section.

12. The coating device according to any one of claims 1 to 11,
wherein the flow channel (1) is made of metal or plastic.

13. The coating device according to any one of claims 1 to 12,
wherein the spraying device (2) is disposed substantially transversely to the longitudinal axis (LA) of the flow channel (1).

14. A method for operating a coating device according to any one of claims 1 to 13,
- wherein at least the region of the workpiece (12) to be coated is inserted into the flow channel (1),
- wherein an air flow (L1, L2) is produced in the flow channel (1) by means of the flow producer (7, 8; 31; 35), and
- wherein a coating material cloud (13) is produced by means of the spraying device (2).

15. The use of the coating device according to any one of claims 1 to 13,
for coating workpieces (12) with coating powder or wet paint.

## Revendications

1. Dispositif de revêtement pour une pièce usinée,
- avec un dispositif de pulvérisation (2),
- avec un canal d'écoulement (1) conçu de façon tubulaire, comportant une ouverture latérale (1.1) pour le dispositif de pulvérisation (2) et une ouverture (1.4) pour la pièce usinée (12), à travers laquelle la pièce usinée (12) fait saillie au moins partiellement à l'intérieur du canal d'écoulement (1) pendant le revêtement,
- avec un moyen pour la charge électrostatique d'un matériau de revêtement (13),
- dans lequel le dispositif de pulvérisation (2) est agencé de manière à permettre la pulvérisation du matériau de revêtement (13) à l'intérieur du canal d'écoulement (1),
- avec un support (6) destiné à maintenir le dispositif de pulvérisation (2) et permettant de déplacer le dispositif de pulvérisation (2) par rapport à la pièce usinée (12),
- avec un générateur de courant (7, 8; 31; 35) agencé et opérable de manière à produire, dans le canal d'écoulement (1), un courant (L1, L2) dirigé dans la direction longitudinale (LA) du canal d'écoulement (1), et
- dans lequel le générateur de courant (7, 8; 31; 35) est agencé derrière le dispositif de pulvérisation (2), vu dans la direction d'écoulement.

2. Dispositif de revêtement selon la revendication 1, dans lequel le canal d'écoulement (1) comporte une ouverture latérale (1.1) à travers laquelle le dispositif de pulvérisation (2) fait saillie à l'intérieur du canal d'écoulement (1).

3. Dispositif de revêtement selon la revendication 1 ou 2,
dans lequel l'ouverture (1.4) pour la pièce usinée se trouve sur le côté frontal du canal d'écoulement (1).

4. Dispositif de revêtement selon l'une des revendications 1 à 3,
avec un dispositif de pulvérisation (4) supplémentaire agencé de manière à ce que son matériau de revêtement (14) puisse être pulvérisé à l'intérieur du canal d'écoulement (1).

5. Dispositif de revêtement selon l'une des revendications 1 à 4,
dans lequel le canal d'écoulement (1) est dirigé de manière à ce que son axe longitudinal (LA) s'étende verticalement.

6. Dispositif de revêtement selon l'une des revendications 1 à 5,
dans lequel le générateur de courant comporte une pompe à jet d'air (8).

7. Dispositif de revêtement selon l'une des revendications 1 à 6,
dans lequel le générateur de courant (7, 8; 31; 35) comporte une soufflerie (16).

8. Dispositif de revêtement selon la revendication 7, avec une grille (11), dans lequel le dispositif de pulvérisation (2) est agencé au-dessus et la soufflerie (16) en-dessous de la grille (11).

9. Dispositif de revêtement selon la revendication 7 ou 8,
dans lequel il est prévu un filtre (15) précédant la soufflerie (16), vu dans la direction d'écoulement.

10. Dispositif de revêtement selon l'une des revendications 1 à 9,
avec un robot maintenant et guidant le dispositif de pulvérisation (2) et/ou la pièce usinée (12).

11. Dispositif de revêtement selon l'une des revendications 1 à 10,
dans lequel le canal d'écoulement (1) présente une section transversale circulaire.

12. Dispositif de revêtement selon l'une des revendications 1 à 11,
dans lequel le canal d'écoulement (1) est constitué de métal ou de plastique.

13. Dispositif de revêtement selon l'une des revendications 1 à 12,
dans lequel le dispositif de pulvérisation (2) est agencé quasiment perpendiculairement à l'axe longitudinal (LA) du canal d'écoulement (1).

14. Procédé pour le fonctionnement d'un dispositif de revêtement selon l'une des revendications 1 à 13,
- dans lequel au moins la région de la pièce usinée (12) à revêtir est insérée dans le canal d'écoulement (1),
- dans lequel un courant d'air (L1, L2) est produit dans le canal d'écoulement (1) au moyen du générateur de courant (7, 8; 31; 35), et
- dans lequel un nuage de matériau de revêtement (13) est produit au moyen du dispositif de pulvérisation (2).

15. Utilisation du Dispositif de revêtement selon l'une des revendications 1 à 13,
pour le revêtement de pièces usinées (12) avec une poudre de revêtement ou une peinture humide.
